# FASCICULE DE BREVET EUROPEEN

(11) **EP 3 877 632 B1**
(45) Date de publication et mention de la délivrance du brevet: **16.08.2023**
(21) Numéro de dépôt: 19798095.6
(22) Date de dépôt: 08.11.2019
(51) Int. Cl.: F01M 13/00, F02M 25/06, F02M 35/10, F02M 35/104, F02B 29/04, F02F 1/24, F02F 1/38

(54) **DISPOSITIF DE DIFFUSION BLOW-BY A L'ENTREE DE LA CULASSE**
BLOW-BY-DIFFUSIONSVORRICHTUNG AM EINLASS EINES ZYLINDERKOPFES
BLOW-BY DIFFUSION DEVICE AT INTAKE OF CYLINDER HEAD

(43) Date de publication de la demande: 15.09.2021
(73) Titulaire: Renault s.a.s, 92100 Boulogne Billancourt (FR); NISSAN MOTOR CO., LTD., Yokohama-shi, Kanagawa 221-0023 (JP)
(72) Inventeur: DA SILVA, Paulo, 78500 SARTROUVILLE (FR); VENEZIANI, Thomas, 75015 PARIS (FR)
(74) Mandataire: Renault Group
(86) Numéro de dépôt international: PCT/EP2019/080739
(87) Numéro de publication internationale: WO 2020/094862

(56) Documents cités:
- EP-A1- 2 553 252
- DE-A1- 10 320 493
- FR-A1- 2 961 559
- JP-A- H1 182 197
- US-A1- 2012 255 513
- US-A1- 2013 042 840
- US-A1- 2013 112 159

## Description

### Domaine technique de l'invention

La présente invention concerne un moteur thermique ou à combustion interne de véhicule automobile.

La présente invention concerne également une ligne d'admission du moteur thermique.

La présente invention concerne plus particulièrement une ligne de circulation des gaz d'admission comprenant des gaz de blow-by.

### Etat de la technique

Un moteur thermique ou à combustion interne de véhicule automobile présente une face d'admission à laquelle sont fixés des dispositifs d'amenée d'air frais pour être injectés dans le moteur et une face d'échappement disposée sur un côté opposé à laquelle sont fixés d'autres dispositifs d'échappement d'une ligne d'échappement pour acheminer des gaz brulés vers des systèmes de dépollution et vers l'extérieur du moteur. Les deux faces sont longitudinales et symétriquement opposées l'une à l'autre par rapport à un plan médian vertical s'étendant longitudinalement du moteur.

De manière connue, pour réduire les rejets de polluants, les moteurs thermiques sont dotés de ligne de recirculation de gaz brulés et de gaz de blow-by. Lesdits gaz sont renvoyés vers l'admission du moteur pour être mélangés à l'air frais avant d'être injectés dans le circuit d'admission d'air du moteur.

Les gaz recirculés sont de deux types :
- les gaz recirculés dits haute pression sont prélevés directement à la sortie de la face échappement du moteur par exemple depuis une chambre creusée dans la culasse ou depuis un collecteur d'échappement fixé à ladite culasse.
- les gaz recirculés dits basse pression sont prélevés plus en aval selon le sens d'écoulement des gaz et notamment au niveau ou en aval d'un dispositif de dépollution des gaz brulés tels qu'un catalyseur ou un piège à Nox ou oxydes d'azote.

Les gaz de blow-by sont issus de vapeurs d'huile qui passent par un décanteur d'huile fixé au moteur, de façon générale à un point haut du moteur, à la culasse.

Les gaz brulés recirculés sont généralement mélangés à l'air frais qui peut être compressé suite à un passage au travers d'un étage de compression, de façon connue en amont d'un répartiteur d'admission

Les gaz de blow-by peuvent être injectés dans des conduits d'admission de la culasse par des canaux creusés dans ladite culasse.

La publication EP1447533-A1 propose ainsi une injection de gaz de blow-by par des canaux creusés dans la culasse depuis un décanteur de gaz disposé en partie haute du moteur sur la culasse. FR2961559 A1 décrit un autre exemple de dispositif d'injection des gaz de blow-by.

L'invention concerne une injection des gaz de blow-by à l'admission du moteur thermique. L'invention concerne une implémentation particulière du décanteur de vapeurs d'huile qui est fixé contre un carter-cylindres disposé en dessous de la culasse. Les gaz de blow-by sont ensuite dirigés via un conduit de blow-by creusé de façon verticale dans le carter-cylindres et prolongé dans la culasse pour déboucher de la face d'admission de la culasse à proximité du répartiteur d'admission.

Le perçage desdits canaux aptes à diriger les gaz de blow-by dans les canaux d'admission de la culasse implique de disposer de la matière autour dudit canal ce qui entraine un encombrement plus important de la culasse et une augmentation de la masse de ladite culasse.

Le but de l'invention est de remédier à ces problèmes et un des objets de l'invention est un dispositif d'admission de moteur thermique de véhicule automobile comportant une culasse et un répartiteur d'admission fixé contre une paroi de fixation de la culasse, ledit répartiteur et ladite culasse étant conformés pour présenter un plénum d'admission recouvert par le répartiteur.

### Présentation de l'invention

La présente invention concerne plus particulièrement un dispositif d'admission de moteur thermique de véhicule automobile comportant une culasse et un répartiteur d'admission fixé par système de fixation comportant un trottoir de fixation du répartiteur contre une paroi de fixation de la culasse, ledit répartiteur et ladite culasse étant conformés pour présenter un plénum d'admission recouvert par le répartiteur,
caractérisé en ce que le système de fixation comprend un canal de distribution de gaz de blow-by s'étendant sur la largeur du plénum et agencé entre une paroi du trottoir de fixation du répartiteur et la paroi de fixation de la culasse.

De manière avantageuse, le canal de gaz est agencé entre une paroi du trottoir de fixation du répartiteur et la paroi de fixation de la culasse c'est-à-dire en bordure entre la culasse et le répartiteur ce qui facilite l'obtention dudit canal.

Selon d'autres caractéristiques de l'invention :
- le canal de distribution comprend un enfoncement à la surface de liaison entre la culasse et le répartiteur.

De manière avantageuse, le canal de distribution comprend un enfoncement ou une rainure s'étendant transversalement à l'axe d'écoulement de l'air d'admission creusé à la surface de liaison entre le trottoir de fixation du répartiteur et la paroi de fixation de la culasse. Ledit enfoncement est facile à obtenir par exemple par un lamage.
- le canal de distribution comporte un enfoncement dans la paroi de fixation de la culasse.

De manière avantageuse, le canal de distribution comprend un enfoncement dans la paroi de fixation de la culasse, qui est recouvert par le trottoir de fixation.
- le canal de distribution comporte un enfoncement dans le trottoir de fixation.

De manière avantageuse, le canal de distribution comprend un enfoncement à la surface de liaison du trottoir de fixation du répartiteur d'admission en vis-à-vis avec la paroi de fixation de la culasse, lequel peut être en plastique, l'obtention dudit canal en est facilitée. Ledit enfoncement dans le trottoir de fixation peut aussi être complémentaire d'un autre enfoncement dans la paroi de fixation de la culasse, ce qui a pour effet d'accroitre la section de passage des gaz.
- le canal de distribution comprend une branche verticale débouchant dans le plénum.

Selon l'invention, le canal de distribution est prolongé par une branche verticale débouchant dans le plénum pour diffuser des gaz de blow-by au plus proche de conduit d'admission dans la culasse.
- le débouché de la branche verticale est agencé au droit d'un débouché de conduit d'admission qui est creusé dans la culasse, dans le plénum.

De manière avantageuse, le débouché de la branche verticale est agencé dans la plénum devant un débouché de conduit d'admission creusé dans la culasse pour optimiser l'introduction des gaz de blow-by dans ledit conduit d'admission vers une chambre à combustion.
- le dispositif d'admission comprend un joint d'étanchéité entourant le plénum et le canal de distribution avec la branche verticale.

De manière avantageuse, le dispositif d'admission comprend un joint d'étanchéité maintenu entre le répartiteur d'admission et la culasse, entourant la section transversale du plénum et le canal de distribution avec la branche verticale, pour optimiser l'injection des gaz de blow-by dans le conduit d'admission.
- le dispositif comprend un débouché d'un conduit d'amenée de gaz débouchant de la paroi de fixation de la culasse de la paroi de fixation de la culasse.

De manière avantageuse, le dispositif d'admission comprend aussi un débouché de gaz débouchant de la paroi de fixation de la culasse pour optimiser l'encombrement du moteur et de faciliter le dispositif d'admission.
- le canal de distribution est apte à relier le débouché du conduit d'amenée de gaz avec la branche verticale de diffusion.

De manière avantageuse, le canal de distribution est apte à relier le débouché du conduit d'amenée de gaz et la branche verticale de diffusion pour permettre l'admission aisée et optimale des gaz dans le conduit d'admission du moteur.
- le trottoir de fixation du répartiteur comprend un enfoncement de réception en vis-à-vis avec le débouché de l'entrée de gaz de la culasse.

De manière avantageuse, le trottoir de fixation comprend un enfoncement en vis-à-vis du débouché des gaz de la paroi de fixation de la culasse pour amener de façon optimale les gaz vers le canal de distribution.

### Brève description des figures

D'autres caractéristiques et avantages de l'invention apparaîtront à la lecture de la description qui suit de modes particuliers de réalisation de l'invention donnés à titre d'exemples non limitatifs et représentés sur les dessins annexés, dans lesquels :
[Fig. 1] est une vue schématique d'une face d'admission de culasse de moteur thermique selon l'état de l'art.
[Fig. 2] est une vue schématique d'une paroi de fixation de la culasse pour un répartiteur d'admission selon l'invention.
[Fig.3] est une vue schématique d'un répartiteur d'admission selon l'invention.
[Fig.4] est une vue schématique de coupe transversale du dispositif d'admission selon l'invention.
[Fig.5] est une vue schématique du répartiteur d'admission selon l'invention avec un joint d'étanchéité.

### Description détaillée des figures

Dans la description qui va suivre, des chiffres de référence identiques désignent des pièces identiques ou ayant des fonctions similaires.

Les termes haut/bas se réfèrent à un axe vertical qui peut être l'axe perpendiculaire au plan horizontal du véhicule passant par les essieux des roues. Le terme horizontal se réfère à un axe parallèle au plan de liaison de la culasse contre le carter-cylindres, ledit axe est dit horizontal quand le véhicule est disposé sur un plan horizontal terrestre.

Les termes amont/aval se réfèrent au sens d'écoulement des gaz ou de l'air d'admission.

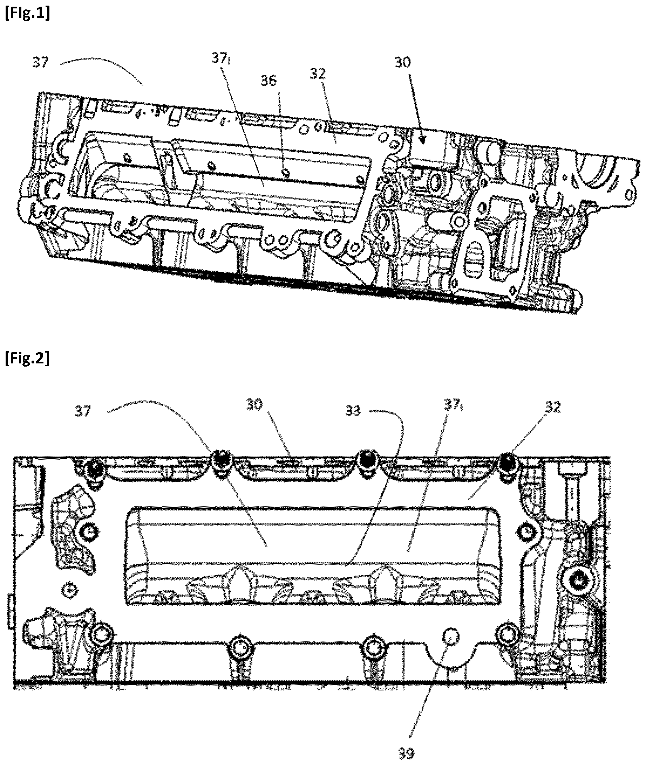

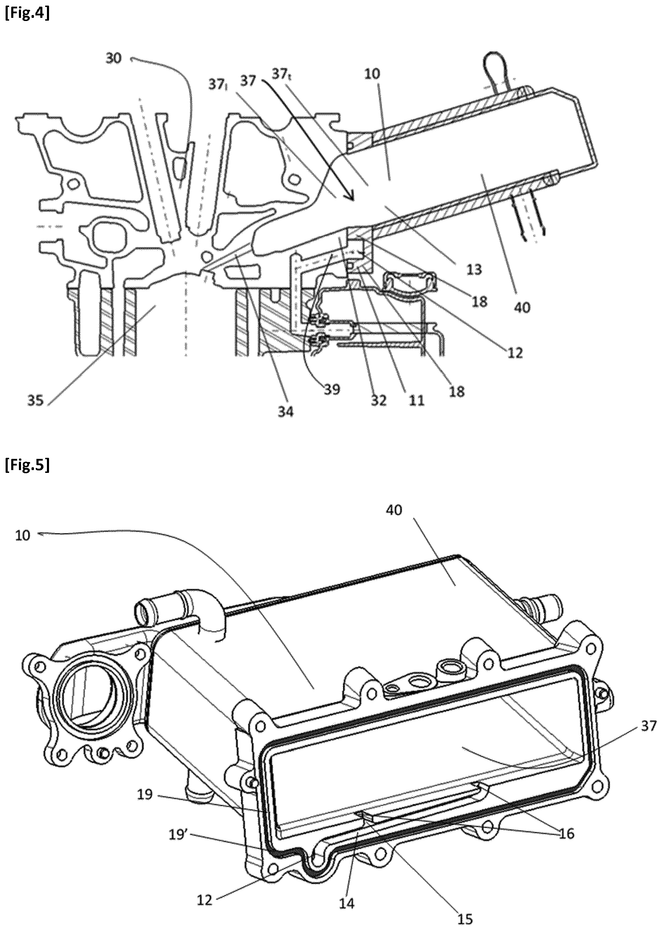

De manière connue, les moteurs thermiques ou à combustion peuvent comprendre un circuit de réinjection de gaz de blow-by à la face admission de la culasse. Tel que représenté dans la figure 1, la culasse 30 comprend une face d'admission 31. Dans ladite face d'amission, la culasse comporte une paroi de fixation 32 qui peut border un enfoncement 33 formant une partie aval 37_{I} d'un plénum d'admission 37. Des conduits d'admission 34 sont creusés dans la culasse pour relier des cylindres 35 du moteur au plénum 37. Lesdits conduits d'admission 34 débouchent dans le plénum comme représenté sur la figure 4.

Il est connu dans l'état de d'art d'avoir un décanteur (non représenté) disposé en haut du moteur, contre la culasse par exemple, pour séparer dans des vapeurs de gaz issus du fonctionnement du moteur des gaz encore chauds et de l'huile. L'huile peut alors retomber par gravité vers un carter d'huile selon différents chemins. Les gaz sont appelés gaz de blow-by et sont réintroduits à l'admission du moteur. Des conduits de blow-by peuvent être percés au travers de la culasse depuis le décanteur jusqu'au plénum d'admission. Lesdits conduits de blow-by débouchent en partie supérieure du plénum par des débouchés 36. Le perçage des conduits de blow-by nécessitent d'avoir de la matière afin de garder une rigidité minimale de la culasse. Le perçage de conduits de blow-by peut entrainer une contrainte de masse minimale de culasse, ce qui va à l'encontre des objectifs de réduction de masse du véhicule et notamment du moteur pour améliorer la consommation du moteur et de réduire les rejets de polluants à l'extérieur du véhicule.

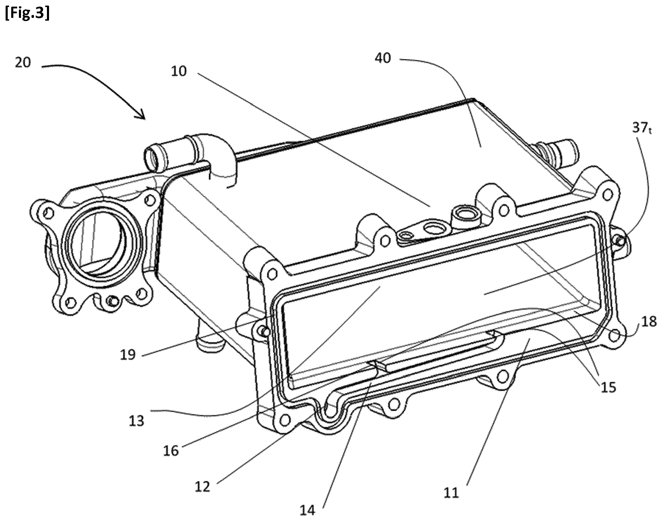

La figure 2 représente une culasse 30 avec la face 31 selon un mode de réalisation de l'invention. La culasse 30 comporte l'enfoncement 33 composant le plénum 37 d'admission d'air et de gaz dans le moteur. La culasse comporte une paroi de fixation 38 sur laquelle est fixé en appui le répartiteur d'admission 10 par un trottoir de fixation 11 représenté dans les figures 3 à 5.

Le dispositif d'admission 20 comporte donc la culasse avec l'enfoncement 33 et le répartiteur d'admission 10 fixé l'un à l'autre par un système de fixation comprenant trottoir de fixation 11 du répartiteur 10 contre une paroi de fixation 32 de la culasse 30.

Le trottoir de fixation 11 est fixé en appui contre la paroi de fixation 32 de la culasse 30. Ledit trottoir recouvre de manière avantageuse la surface de la paroi de fixation. La culasse comporte un débouché 39 d'un conduit d'amenée de gaz de blow-by. Selon un mode de réalisation de l'invention, le décanteur n'est pas fixé en partie haute du moteur mais contre une paroi d'un carter-cylindres, le carter-cylindres est de manière connue disposé en dessous de la culasse. Le conduit d'amenée peut par exemple s'étendre verticalement depuis le carter-cylindres vers la culasse. Ledit conduit d'amenée est de manière préférentielle creusé dans la paroi du carter-cylindres et de la culasse pour obtenir un moteur compact.

L'invention n'est cependant pas limitée à des moteurs comportant un décanteur disposé en position basse fixé au carter-cylindres.

Le débouché 39 du conduit d'amenée des gaz de blow-by est de manière préférentielle agencé à côté de l'enfoncement 33 formant le plénum. Ledit débouché 39 est selon la figure 2 disposé dans la paroi de fixation 38 qui est recouverte par le répartiteur 10, notamment par le trottoir 11 de fixation dudit répartiteur.

Le répartiteur 10 peut comprendre un cône de diffusion 13 dont la section en extrémité aval selon le sens de circulation des gaz est sensiblement égale à la section de passage de l'enfoncement 33 de la culasse 30. Le volume intérieur 37t du cône de diffusion et le volume de l'enfoncement 33 de la culasse forme le plénum 37 du dispositif d'admission 20. Le volume intérieur 37t du cône de diffusion forme donc la partie amont dudit plénum 37. Selon les figures 3 à 5, le cône de diffusion est en forme de parallélépipède car il est dans le prolongement d'un échangeur de chaleur 40.

Selon l'invention, le dispositif d'admission 20 comporte un enfoncement ou creusement à une surface de liaison entre le trottoir de fixation 11 du répartiteur 10 et la paroi de fixation 32 de la culasse 30.

Selon un mode de réalisation préféré de l'invention représenté par les figures 3 à 5, on peut voir que ledit répartiteur peut comprendre un enfoncement 12 de réception dans le trottoir de fixation 11 destiné à venir en vis-à-vis du débouché 39 de la culasse quand le répartiteur est fixé en appui contre la culasse. Ledit enfoncement 12 de réception est connecté à un canal de distribution 14 qui s'étend selon la largeur du répartiteur selon une direction sensiblement horizontale, de façon sensiblement parallèle à l'axe longitudinal du moteur passant par les centres des cylindres du moteur sur un plan horizontal, quand le répartiteur est monté fixé contre la paroi de fixation de la culasse dudit moteur. Le canal de distribution est obtenu par un enfoncement depuis la surface de liaison de ladite paroi en vis-à-vis avec la paroi de fixation de la culasse. Il est par exemple creusé dans la paroi 18 du trottoir 11 de fixation du répartiteur. Le canal de distribution ainsi que tous les enfoncements décrits notamment l'enfoncement de réception et les branches verticales de diffusion 15, sont donc délimités entre la paroi du trottoir 11 de fixation du répartiteur 10 et la paroi de fixation 32 de la culasse 30. De manière préférentielle, le répartiteur 10 est obtenu de matière plastique, ce qui rend plus aisé l'obtention du canal de distribution et en général des creusements ou rainures dans la paroi 18 du trottoir de fixation 11 du répartiteur.

Le canal de distribution 14 est prolongé par au moins une branche verticale 15 qui débouche dans le plénum 37. De manière préférentielle, le débouché 16 de la branche verticale de diffusion 15 est disposé au droit du débouché de conduit d'admission 34 dans la culasse. On entend par là que le débouché 16 de la branche verticale est agencé sur une ligne d'écoulement d'air d'admission depuis le répartiteur d'admission 10 jusqu'au débouché du conduit d'admission 34 le plus proche dans la culasse 30. Selon les figures 3 et 5, le canal de distribution 14 est prolongé par deux branches verticales 15 pour un moteur à 2 cylindres, creusées dans la paroi 18 du trottoir de fixation 11 du répartiteur 10. Le nombre de branches verticales est égal au nombre de cylindres du moteur.

Le trottoir de fixation comporte une rainure périphérique 19 qui entoure la section de passage du cône de diffusion avec le canal de distribution, l'enfoncement de réception 12 et les branches verticales de diffusion 15. La rainure périphérique est apte à recevoir un joint d'étanchéité 19'. Il est à noter qu'il n'est pas nécessaire d'avoir un joint entre le canal de distribution et la section de passage du cône de diffusion car les gaz de blow-by sont destinés à entrer dans le plénum 37.

Le répartiteur est fixé contre la culasse, le trottoir de fixation 11 du répartiteur est alors en appui contre la paroi de fixation 32 de la culasse. Il recouvre donc l'enfoncement 33 dans la culasse ainsi que le débouché 39 des gaz de blow-by.

### L'objectif est atteint :

Le dispositif d'admission 20 selon l'invention permet une admission de gaz de blow-by facile à mettre en oeuvre et peu coûteuse. De plus, l'obtention des branches verticales de diffusion peuvent être optimales pour obtenir une bonne diffusion des gaz de blow-by dans le plénum et dans les conduits d'admission dans la culasse.

Comme il va de soi, l'invention ne se limite pas aux seules formes d'exécution de cette prise, décrites ci-dessus à titre d'exemples, elle en embrasse au contraire toutes les variantes.

Ainsi le canal de distribution 14 ainsi que le branches verticales de diffusion 15 peuvent être obtenus par lamage à la surface de la paroi de fixation de la culasse 30

Le débouché des branches verticales peut aussi par exemple être agencé entre deux débouchés de conduits d'admission d'air dans le plénum.

## Revendications

1. Dispositif d'admission (20) de moteur thermique de véhicule automobile comportant une culasse (30) et un répartiteur d'admission (10) fixé à la culasse par un système de fixation comportant un trottoir de fixation (11) du répartiteur contre une paroi de fixation (32) de la culasse, ledit répartiteur et ladite culasse étant conformés pour présenter un plénum d'admission (37) recouvert par le répartiteur, des conduits d'admission (34) étant creusés dans la culasse pour relier des cylindres (35) du moteur au plénum (37), lesdits conduits d'admission (34) débouchant dans le plénum (37), le système de fixation comprenant un canal de distribution (14) de gaz de blow-by s'étendant sur la largeur du plénum (37) et agencé entre une paroi (18) du trottoir de fixation (11) du répartiteur et la paroi de fixation (32) de la culasse, **caractérisé en ce que** le canal de distribution (14) comprend une branche verticale de diffusion (15) débouchant dans le plénum.

2. Dispositif d'admission (20) de moteur thermique selon la revendication 1, **caractérisé en ce que** le canal de distribution (14) comprend un enfoncement à la surface de liaison entre la culasse (30) et le répartiteur (10).

3. Dispositif d'admission (20) selon la revendication 1 ou 2, **caractérisé en ce que** le canal de distribution (14) comporte un creusement dans la paroi de fixation (32) de la culasse (30).

4. Dispositif d'admission (20) selon l'une quelconque des revendications 1 à 3, **caractérisé en ce que** le canal de distribution (14) comporte un creusement dans la paroi (18) du trottoir de fixation.

5. Dispositif d'admission (20) selon l'une quelconque des revendications 1 à 4, **caractérisé en ce que** le débouché de la branche verticale de diffusion (15) est agencé en face d'un débouché de conduit d'admission qui est creusé dans la culasse, dans le plénum (37).

6. Dispositif d'admission (20) selon l'une quelconque des revendications 1 à 5, **caractérisé en ce que** le répartiteur d'admission (10) comprend une rainure d'étanchéité (19) entourant la section de passage du plénum (37) et le canal de distribution (14) avec la branche verticale de diffusion (15) et recevant un joint d'étanchéité (19').

7. Dispositif d'admission (20) selon l'une quelconque des revendications 1 à 6, **caractérisé en ce que** le dispositif comprend un débouché (39) d'un conduit d'amenée de gaz débouchant de la paroi de fixation (32) de la culasse.

8. Dispositif d'admission (20) selon l'une quelconque des revendications 1 à 7, **caractérisé en ce que** le canal de distribution (14) est apte à relier le débouché du conduit d'amenée de gaz (39) avec la branche verticale de diffusion (15).

9. Dispositif d'admission (20) selon la revendication 8, **caractérisé en ce que** le trottoir de fixation (11) du répartiteur comprend un enfoncement de réception (12) en vis-à-vis avec le débouché (39) de conduit d'amenée de gaz de la culasse (30).

## Patentansprüche

1. Ansaugvorrichtung (20) eines Verbrennungsmotors eines Kraftfahrzeugs, beinhaltend einen Zylinderkopf (30) und einen Ansaugverteiler (10), der an dem Zylinderkopf durch ein Befestigungssystem befestigt ist, das einen Befestigungssteg (11) des Verteilers gegen eine Befestigungswand (32) des Zylinderkopfes beinhaltet, wobei der Verteiler und der Zylinderkopf so ausgestaltet sind, dass sie ein Ansaugplenum (37) aufweisen, das von dem Verteiler abgedeckt wird, wobei Ansaugkanäle (34) in den Zylinderkopf gebohrt sind, um Zylinder (35) des Motors mit dem Plenum (37) zu verbinden, wobei die Ansaugkanäle (34) in das Plenum (37) münden, wobei das Befestigungssystem einen Verteilungskanal (14) für Blow-by-Gas umfasst, der sich über die Breite des Plenums (37) erstreckt und zwischen einer Wand (18) des Befestigungsstegs (11) des Verteilers und der Befestigungswand (32) des Zylinderkopfes angeordnet ist, **dadurch gekennzeichnet, dass** der Verteilungskanal (14) einen vertikalen Diffusionszweig (15) umfasst, der in das Plenum mündet.

2. Ansaugvorrichtung (20) eines Verbrennungsmotors nach Anspruch 1, **dadurch gekennzeichnet, dass** der Verteilungskanal (14) eine Vertiefung an der Verbindungsfläche zwischen dem Zylinderkopf (30) und dem Verteiler (10) umfasst.

3. Ansaugvorrichtung (20) nach Anspruch 1 oder 2, **dadurch gekennzeichnet, dass** der Verteilungskanal (14) eine Aussparung in der Befestigungswand (32) des Zylinderkopfes (30) umfasst.

4. Ansaugvorrichtung (20) nach einem der Ansprüche 1 bis 3, **dadurch gekennzeichnet, dass** der Verteilungskanal (14) eine Aussparung in der Wand (18) des Befestigungsstegs umfasst.

5. Ansaugvorrichtung (20) nach einem der Ansprüche 1 bis 4, **dadurch gekennzeichnet, dass** die Mündung des vertikalen Diffusionszweigs (15) gegenüber einer Ansaugkanalmündung angeordnet ist, die in den Zylinderkopf gebohrt ist, im Plenum (37).

6. Ansaugvorrichtung (20) nach einem der Ansprüche 1 bis 5, **dadurch gekennzeichnet, dass** der Ansaugverteiler (10) eine Dichtungsrille (19) umfasst, die den Durchtrittsquerschnitt des Plenums (37) und den Verteilungskanal (14) mit dem vertikalen Diffusionszweig (15) umgibt und eine Dichtung (19') aufnimmt.

7. Ansaugvorrichtung (20) nach einem der Ansprüche 1 bis 6, **dadurch gekennzeichnet, dass** die Vorrichtung eine Mündung (39) eines Gaszuführkanals umfasst, die an der Befestigungswand (32) des Zylinderkopfes mündet.

8. Ansaugvorrichtung (20) nach einem der Ansprüche 1 bis 7, **dadurch gekennzeichnet, dass** der Verteilungskanal (14) geeignet ist, die Mündung des Gaszuführkanals (39) mit dem vertikalen Diffusionszweig (15) zu verbinden.

9. Ansaugvorrichtung (20) nach Anspruch 8, **dadurch gekennzeichnet, dass** der Befestigungssteg (11) des Verteilers eine Aufnahmevertiefung (12) umfasst, die der Mündung (39) des Gaszuführkanals des Zylinderkopfes (30) gegenüberliegt.

## Claims

1. Motor vehicle heat engine intake device (20) comprising a cylinder head (30) and an intake manifold (10) attached to the cylinder head by an attachment system comprising an attachment flange (11) for attaching the manifold against an attachment wall (32) of the cylinder head, said manifold and said cylinder head being configured to have an intake plenum (37) covered by the manifold, intake ducts (34) being cut into the cylinder head to connect cylinders (35) of the engine to the plenum (37), said intake ducts (34) leading into the plenum (37), the attachment system comprising a blow-by gas distribution channel (14) extending over the width of the plenum (37) and arranged between a wall (18) of the attachment flange (11) of the manifold and the attachment wall (32) of the cylinder head, **characterized in that** the distribution channel (14) comprises a vertical diffusion branch (15) leading into the plenum.

2. Heat engine intake device (20) according to Claim 1, **characterized in that** the distribution channel (14) comprises an indentation at the connection surface between the cylinder head (30) and the manifold (10).

3. Intake device (20) according to Claim 1 or 2, **characterized in that** the distribution channel (14) comprises a cutting in the attachment wall (32) of the cylinder head (30).

4. Intake device (20) according to any one of Claims 1 to 3, **characterized in that** the distribution channel (14) comprises a cutting in the wall (18) of the attachment flange.

5. Intake device (20) according to any one of Claims 1 to 4, **characterized in that** the lead-out of the vertical diffusion branch (15) is arranged opposite a lead-out into the plenum (37) of an intake duct which is cut into the cylinder head.

6. Intake device (20) according to any one of Claims 1 to 5, **characterized in that** the intake manifold (10) comprises a sealing groove (19) surrounding the passage cross section of the plenum (37) and the distribution channel (14) with the vertical diffusion branch (15) and receiving a tightness seal (19').

7. Intake device (20) according to any one of Claims 1 to 6, **characterized in that** the device comprises a lead-out (39) of a gas supply duct leading out of the attachment wall (32) of the cylinder head.

8. Intake device (20) according to any one of Claims 1 to 7, **characterized in that** the distribution channel (14) is able to connect the lead-out of the gas supply duct (39) to the vertical diffusion branch (15).

9. Intake device (20) according to Claim 8, **characterized in that** the attachment flange (11) of the manifold comprises a reception indentation (12) opposite the lead-out (39) of the gas supply duct from the cylinder head (30).
